# FASCICULE DE BREVET EUROPEEN

(11) **EP 2 614 410 B1**
(45) Date de publication et mention de la délivrance du brevet: **03.08.2016**
(21) Numéro de dépôt: 11773050.7
(22) Date de dépôt: 08.09.2011
(51) Int. Cl.: G03H 1/00, G03H 1/30, G06T 1/00, G03H 1/08

(54) **PROCÉDÉ DE DISSIMULATION D'UN HOLOGRAMME SYNTHÉTIQUE DANS UNE IMAGE BINAIRE**
VERFAHREN ZUR VERBERGUNG EINES SYNTHETISCHEN HOLOGRAMMS BEI EINEM BINÄREN BILD
METHOD FOR CONCEALING A SYNTHETIC HOLOGRAM IN A BINARY IMAGE

(30) Priorité: 08.09.2010 FR 1057127
(43) Date de publication de la demande: 17.07.2013
(73) Titulaire: Commissariat à l'Énergie Atomique et aux Énergies Alternatives, 75015 Paris (FR)
(72) Inventeur: MARTINEZ, Christophe, 38100 Grenoble (FR)
(74) Mandataire: Thibon, Laurent
(86) Numéro de dépôt international: PCT/FR2011/052055
(87) Numéro de publication internationale: WO 2012/032267

(56) Documents cités:
- US-A- 6 075 627
- AOKI Y: "WATERMARKING TECHNIQUE USING COMPUTER-GENERATED HOLOGRAMS", ELECTRONICS & COMMUNICATIONS IN JAPAN, PART III - FUNDAMENTALELECTRONIC SCIENCE, WILEY, HOBOKEN, NJ, US, vol. 84, no. 1, PART 03, 1 janvier 2001 (2001-01-01), pages 21-31, XP000975386, ISSN: 1042-0967, DOI: DOI:10.1002/1520-6440(200101)84:1&LT,21::A ID-ECJC3&GT,3.0.CO,2-T
- ROSEN J ET AL: 'HIDDEN IMAGES IN HALFTONE PICTURES' APPLIED OPTICS vol. 40, no. 20, 10 Juillet 2001, OPTICAL SOCIETY OF AMERICA, WASHINGTON, DC; US, pages 3346 - 3353, XP001081102 DOI: 10.1364/AO.40.003346 ISSN: 0003-6935

## Description

### Domaine de l'invention

La présente invention concerne les hologrammes synthétiques. Plus particulièrement, la présente invention concerne un procédé de dissimulation d'un hologramme synthétique dans une image binaire.

### Exposé de l'art antérieur

Dans de nombreux secteurs, notamment dans l'industrie du luxe (par exemple parfumerie, bijouterie ou maroquinerie), ou dans le domaine des médicaments, la lutte contre la copie des produits de marque est une préoccupation quotidienne. Plusieurs procédés sont actuellement utilisés pour tenter de garantir l'authenticité des produits de marque. Le plus simple consiste à reproduire ou à fixer un logo de la marque sur les produits. Cependant, la reproduction d'un logo par un fraudeur est relativement facile.

D'autres procédés de marquage, plus difficilement repérables et copiables, sont connus. L'un d'entre eux consiste à placer une puce d'identification transparente, invisible à l'oeil nu, sur chacun des produits d'un lot, un hologramme étant formé sur la puce transparente. L'hologramme peut être obtenu en calculant la transformée de Fourier d'une image représentant par exemple le logo de la marque. La provenance des produits est ainsi garantie par la présence, ou non, de l'hologramme.

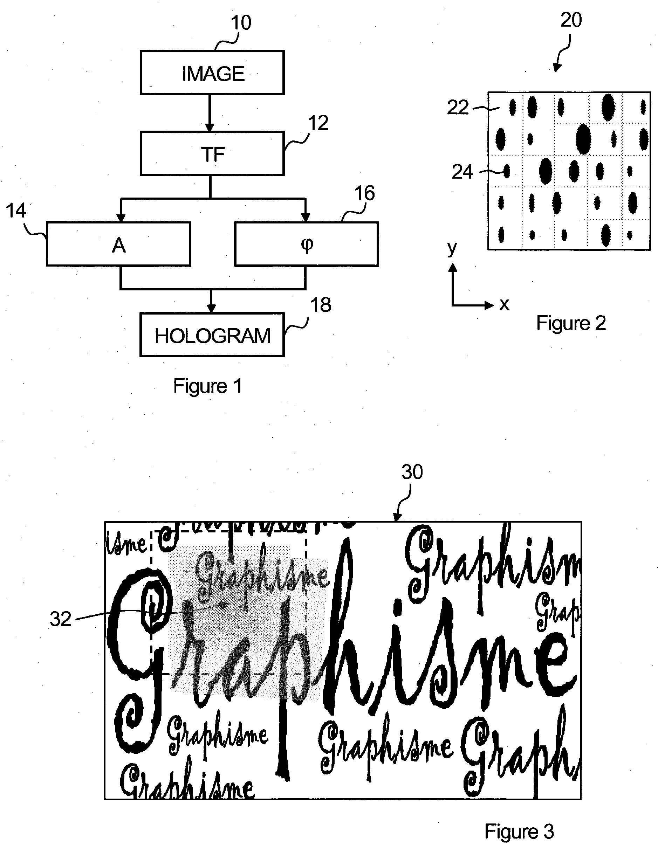

La figure 1 illustre un procédé de formation d'un hologramme synthétique, par exemple un hologramme par codage d'ouvertures. On part d'une image initiale 10 (IMAGE), par exemple un logo ou une marque, puis on réalise le calcul, à une étape 12 (TF), de la transformée de Fourier de cette image. Le calcul de cette transformée de Fourier permet d'obtenir une image d'amplitude 14 (A) et une image de la phase 16 (ϕ) de la transformée de Fourier. On forme ensuite un hologramme synthétique (étape 18, HOLOGRAM) à partir de l'image de l'amplitude A et de l'image de la phase ϕ de la transformée de Fourier.

A titre d'exemple, un hologramme synthétique par codage d'ouvertures est formé de la façon suivante. Les images d'amplitude A et de phase ϕ sont découpées en un nombre prédéfini de cellules élémentaires. L'hologramme est également constitué d'un même nombre de cellules élémentaires.

La figure 2 illustre un exemple d'un hologramme synthétique par codage d'ouvertures 20. Dans chaque cellule élémentaire 22 de l'hologramme est formée une ouverture 24. Les ouvertures 24 sont centrées, dans chaque ligne, selon une première direction y de l'hologramme. La surface des ouvertures 24 dans chacune des cellules élémentaires de l'hologramme correspond à l'amplitude de la cellule élémentaire associée de l'image d'amplitude A. Le décalage des ouvertures 24 selon une seconde direction x de l'hologramme correspond à la phase de la cellule élémentaire associée de l'image de phase ϕ.

De façon pratique, un hologramme synthétique par codage d'ouvertures peut être formé sur une lame mince de verre sur laquelle est déposée une fine couche opaque, par exemple d'oxyde de platine. On grave ensuite des portions de l'oxyde de platine pour former des régions transparentes ou opaques. Dans le cas de l'hologramme de la figure 2, les portions gravées sont les portions situées à l'extérieur des contours des ouvertures 24.

D'autres types d'hologrammes synthétiques sont connus, et sont notamment décrits dans la publication intitulée "Computer generated holograms : an historical review", de G. Tricoles, Applied Ôptics 1981, vol 26 no 20, pp 4351-4360. Notamment, on connaît des hologrammes synthétiques dans lesquels chacune des cellules élémentaires comprend plusieurs ouvertures dont les tailles respectives codent l'amplitude et la phase de la cellule élémentaire correspondante, des hologrammes dont chaque cellule représente une portion d'interférogramme dont la largeur et le positionnement codent l'amplitude et la phase de la transformée de Fourier, ou encore des hologrammes qui codent directement la phase par des changements d'épaisseur de la lame de verre sur laquelle est formé l'hologramme.

Il est également connu de combiner des hologrammes synthétiques avec des images binaires, c'est-à-dire des images à deux niveaux de couleur.

La figure 3 illustre une telle combinaison.

En figure 3 est représentée une image binaire visible 30 comprenant une répétition du mot "Graphisme". Sur une portion de l'image binaire 30 est intégré un hologramme synthétique 32 dont le contour est délimité par des pointillés.

Pour intégrer un hologramme dans une image binaire sans perdre d'information, les cellules élémentaires de l'hologramme superposées aux portions foncées de l'image binaire sont inversées et déphasées d'un déphasage voisin de π selon une technique connue, présentée par exemple dans la demande de brevet français non publiée FR 09/56913 de la demanderesse, déposée le 5 octobre 2009 (B9741).

Une inversion d'une cellule élémentaire consiste, par exemple dans le cas de l'hologramme synthétique par codage d'ouvertures de la figure 2, à inverser les parties claires et opaques de cette cellule. On forme ainsi une cellule élémentaire dont le grisé est différent de la cellule initiale. Un déphasage voisin de π est ensuite appliqué au motif central des cellules concernées. De façon connue, une cellule élémentaire et une cellule élémentaire inversée et déphasée procurent des effets diffractifs identiques.

Un exemple particulier d'hologramme synthétique par codage d'ouvertures est décrit dans l'article de Yoshinao Aoki intitulé "Watermarking technique using computer-generated holograms", Electronics & Communications in Japan, Part III - Fundamentalelectronic Science, Wiley, Hoboken, NJ, US, Vol. 84, No. 1, Part 3, 1 janvier 2001 (2001-01-01), pages 21-31.

Rosen et al décrit également des techniques utilisées pour le marquage d'images en utilisant un codage par ouvertures dans l'article "Hidden images in halftone pictures" (Applied Optics, vol.40, no.20 du 10 juillet 2001, pp.3346-3353).

Un problème avec l'utilisation d'hologrammes synthétiques simples est que de tels hologrammes sont visibles. En effet, du fait du calcul de la transformée de Fourier à l'étape 12, un hologramme synthétique est constitué d'une portion centrale plus marquée (plus foncée) que le reste de l'hologramme (voir figure 3). Ainsi, un fraudeur peut repérer l'hologramme et utiliser un système optique adapté pour calculer la transformée de Fourier inverse de l'hologramme et donc obtenir l'image utilisée pour former cet hologramme. Une fois cette image obtenue, le fraudeur peut facilement recréer et copier l'hologramme.

Ainsi, un besoin existe d'un procédé de formation d'hologrammes synthétiques intégrés dans une image visible et dont la localisation ne peut pas être détectée.

### Résumé

Un objet d'un mode de réalisation de la présente invention est de prévoir un procédé de marquage par un hologramme synthétique intégré dans une image visible, évitant que l'hologramme ne soit-repérable.

Un autre objet d'un mode de réalisation de la présente invention est de prévoir un procédé de marquage par un hologramme synthétique dont la lecture directe n'est pas possible.

Ainsi, un mode de réalisation de la présente invention prévoit un support comportant une image binaire visible intégrant un hologramme synthétique non repérable selon la revendication 1.

Un mode de réalisation de la présente invention prévoit en outre un procédé de dissimulation d'un hologramme synthétique selon la revendication 4. D'autres mode de réalisations sont présentés dans les revendications dépendantes.

Un mode de réalisation de la présente invention prévoit en outre un procédé de lecture d'un hologramme tel que défini ci-dessus, comprenant une étape de masquage de la troisième portion du motif binaire.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, est un organigramme d'un procédé de formation d'un hologramme synthétique ;
la figure 2, précédemment décrite, illustre un exemple d'un hologramme synthétique par codage d'ouvertures ;
la figure 3, précédemment décrite, illustre un hologramme synthétique superposé à un motif binaire visible ;
la figure 4 est un organigramme d'un procédé de brouillage d'hologramme synthétique selon un mode de réalisation de la présente invention ;
la figure 5 est une courbe de l'amplitude de la transformée de Fourier d'une image utilisée pour former un hologramme, selon un plan passant par le centre de l'image d'amplitude ;
les figures 6A, 6B, 6C et 6D illustrent, respectivement, l'amplitude d'une première transformée de Fourier modifiée d'une image utilisée pour former un hologramme selon un plan passant par le centre de l'image d'amplitude, une image d'amplitude obtenue par l'application de cette transformée de Fourier modifiée, une image de phase obtenue par l'application de cette transformée de Fourier modifiée et une image obtenue par lecture directe d'un hologramme formé à partir des images d'amplitude et de phase ;
les figures 7A, 7B, 7C et 7D illustrent, respectivement, l'amplitude d'une seconde transformée de Fourier modifiée d'une image utilisée pour former un hologramme selon un plan passant par le centre de l'image d'amplitude, une image d'amplitude obtenue par l'application de cette transformée de Fourier modifiée, une image de phase obtenue par l'application de cette transformée de Fourier modifiée et une image obtenue par lecture directe d'un hologramme formé à partir des images d'amplitude et de phase ;
la figure 8 illustre une superposition d'un motif binaire visible et d'un hologramme brouillé selon un mode de réalisation de la présente invention ;
les figures 9A et 9B sont des vues agrandies illustrant un traitement appliqué à une structure telle que celle de la figure 7 ; et
la figure 10 illustre le résultat obtenu dans le cas de l'intégration de deux hologrammes brouillés dans une image réelle.

Par souci de clarté les diverses figures ne sont pas tracées à l'échelle.

### Description détaillée

Pour éviter qu'un ou plusieurs hologrammes formés sur une puce, sur laquelle est formé un motif binaire, ne soient directement visibles, on prévoit de brouiller ce ou ces hologrammes.

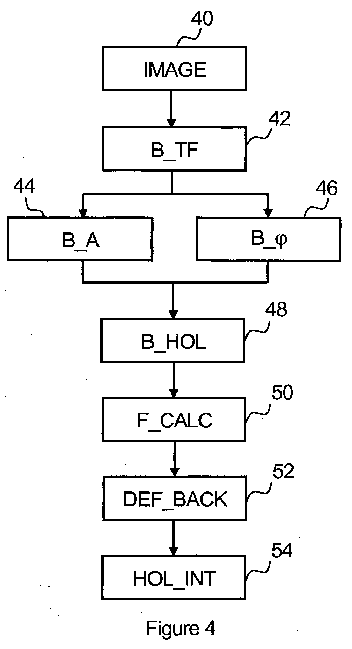

La figure 4 est un organigramme d'un tel procédé, les différentes étapes du procédé étant détaillées dans la suite de la description.

A une étape 40, on part d'une image que l'on souhaite transformer en hologramme. A une étape 42, on calcule une transformée de Fourier brouillée de l'image (B_TF), ce qui permet d'obtenir, à une étape 44, une image de l'amplitude brouillée (B_A) et, à une étape 46, une image de phase brouillée (B_ϕ) de la transformée de Fourier.

A partir des images d'amplitude B_A et de phase B_ϕ brouillées de la transformée de Fourier, on forme, à une étape 48. (B_HOL), un hologramme synthétique, par exemple un hologramme synthétique codé tel que l'hologramme de la figure 2.

Ensuite, à une étape 50 (F_CALC), on calcule un certain nombre de caractéristiques de l'hologramme obtenu à l'étape 48 liées au rendu visible de cet hologramme, de façon à pouvoir, à une étape 52 (DEF_BACK), définir une région de contour de l'hologramme. Enfin, à une étape 54 (HOL_INT), un hologramme dont le contour est défini par la région formée à l'étape 52 est intégré dans l'image binaire visible, l'hologramme et le contour présentant une taille totale égale à celle de l'image binaire.

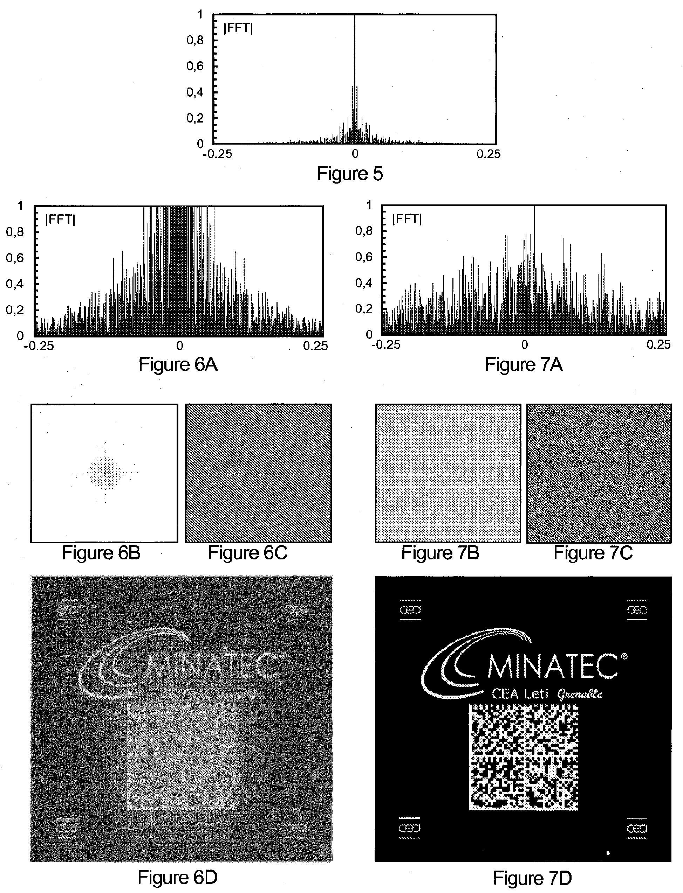

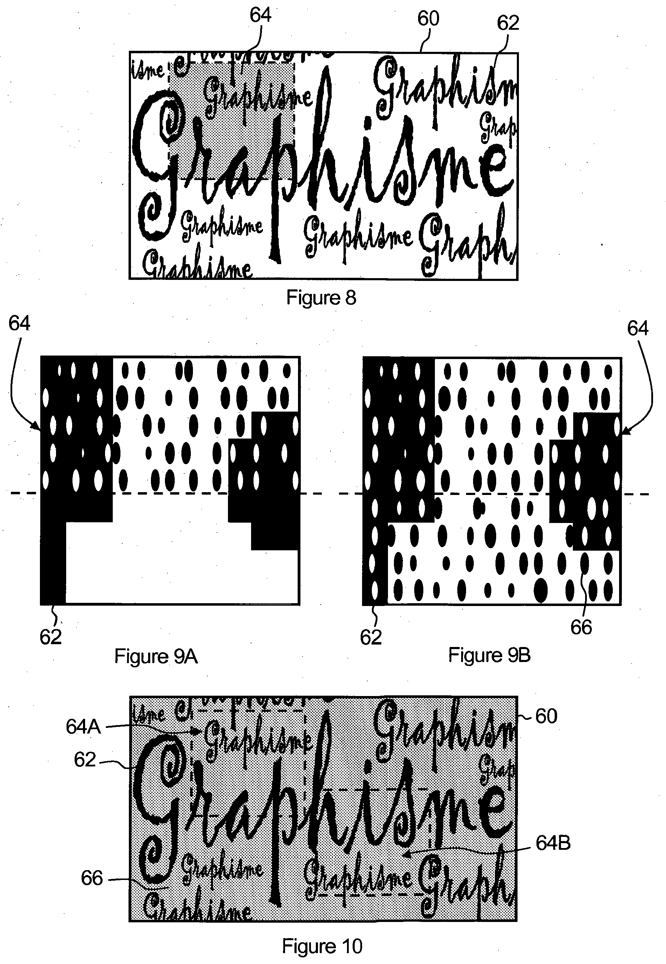

Les étapes présentées en relation avec l'organigramme de la figure 4 sont détaillées ci-après. Notamment, l'étape 42 est précisée en relation avec les figures 5 à 8 et les étapes 52 et 54 en relation avec les figures 9A et 9B.

La figure 5 est une courbe de l'amplitude de la transformée de Fourier d'une image utilisée pour former un hologramme selon un plan passant par le centre de l'image d'amplitude. La transformée de Fourier de l'image présente un pic très important en son centre, ce qui amène l'hologramme formé directement à partir de cette transformée de Fourier à être grisé principalement en son centre. En effet, si on prend un échantillonnage constant pour former l'hologramme à partir de la transformée de Fourier, seul le centre de l'hologramme correspond à une amplitude importante, et donc à un grisé plus important au niveau de l'hologramme.

Pour éviter l'effet de grisé au centre de l'hologramme, on prévoit de brouiller la transformée de Fourier avant de former l'hologramme (étape 42). Pour cela, plusieurs techniques peuvent être utilisées, et notamment les techniques de brouillage présentées dans la demande de brevet US 4 013 338. Toute autre technique de brouillage connue pourra également être utilisée. On pourra également utiliser des techniques d'écrêtage de la transformée de Fourier, comme cela est décrit ci-après.

Les figures 6A, 6B, 6C et 6D illustrent un premier cas dans lequel la transformée de Fourier est écrêtée et représentent, respectivement, l'amplitude d'une transformée de Fourier écrêtée, une image d'amplitude obtenue par l'application de cette transformée de Fourier écrêtée à une image initiale, une image de phase obtenue par l'application de cette transformée de Fourier écrêtée à l'image initiale, et l'image obtenue par lecture directe d'un hologramme formé à partir des images d'amplitude et de phase des figures 6B et 6C. L'utilisation d'une transformée de Fourier écrêtée est relativement aisée puisqu'il suffit, pour l'obtenir, de limiter la valeur du pic central de la transformée, ainsi qu'une partie des pics secondaires qui l'entourent.

Ainsi, un hologramme formé à partir de cette transformée de Fourier présente un pic central moins marqué que dans le cas de la transformée de Fourier de la figure 5 (voir figure 6B). Cependant, bien que le pic central soit atténué, il n'est pas complètement dissimulé dans l'hologramme et l'hologramme reste visible pour un fraudeur.

De plus, l'image reconstruite à la lecture d'un hologramme formé à partir d'une transformée de Fourier écrêtée est lisible (dans ce cas une matrice de données bidimensionnelle, "DataMatrix"), comme cela est illustré en figure 6D, mais comporte une zone centrale de faible qualité, la qualité de lecture diminuant avec l'application d'un écrêtage important.

La technique de seuillage de la transformée de Fourier permet donc de dissimuler légèrement l'hologramme, mais celui-ci peut rester visible si le seuillage n'est pas assez important. Si on augmente le seuillage, l'hologramme est plus difficile à lire.

Ainsi, un brouillage tel que décrit ci-après sera préféré par rapport à un seuillage, bien qu'un seuillage puisse être utilisé lors de l'étape 42.

Les figures 7A, 7B, 7C et 7D illustrent, respectivement, l'amplitude d'une transformée de Fourier brouillée d'une image utilisée pour former un hologramme, une image d'amplitude obtenue par l'application de cette transformée de Fourier brouillée à une image initiale, une image de phase obtenue par l'application de cette transformée de Fourier brouillée à une image initiale et une image obtenue par lecture directe d'un hologramme formé à partir des images d'amplitude et de phase brouillées.

Dans l'exemple des figures 7A à 7D, le brouillage utilisé est un brouillage de phase qui a pour conséquence de répartir l'amplitude de la transformée de Fourier sur l'ensemble de l'image, sans perte d'information. A titre d'exemple, ce brouillage de phase peut être un brouillage tel que le brouillage proposé dans la demande de brevet US 4 013 338, ou tout type de brouillage connu, par exemple un brouillage de phase aléatoire.

L'application d'un brouillage de phase de la transformée de Fourier permet de répartir l'amplitude de la transformée de Fourier sur l'ensemble de l'image, et donc d'obtenir une image d'amplitude (figure 7B) uniforme.

Avantageusement, l'hologramme obtenu à partir de l'image d'amplitude de la figure 7B et de l'image de phase de la figure 7C est uniforme sur toute sa surface. De plus, comme cela est illustré en figure 7D, l'image obtenue par lecture directe de l'hologramme, avec un dispositif optique adapté, est de très bonne qualité (matrice de données). Ceci est lié au fait que l'application du brouillage n'implique pas de perte d'information dans l'hologramme.

La figure 8 illustre une superposition d'un motif binaire visible et d'un hologramme brouillé selon un mode de réalisation de la présente invention.

En figure 8, un hologramme brouillé 64 est intégré dans une image visible 60 comprenant un certain nombre de motifs binaires 62 (le mot "graphisme"). Comme cela a été décrit précédemment, pour intégrer l'hologramme dans l'image binaire, on modifie celui-ci au niveau des portions foncées de l'image binaire. Par exemple, dans le cas d'hologrammes synthétiques par codage d'ouvertures, les cellules au niveau des portions foncées de l'image visible sont inversées (cellules négatives) puis déphasées de π (à 10 % près).

L'hologramme 64 intégré dans l'image 60 est, dans le cas de la figure 8, visible puisqu'il forme une zone grisée dans le fond des motifs 62 non grisé.

Pour dissimuler l'hologramme 64 dans l'image 60, on prévoit de former une zone de "leurre" dans l'image 60, sur tout le contour de l'hologramme 64.

Les figures 9A et 9B illustrent ce principe. La figure 9A représente un agrandissement de l'hologramme 64 de la figure 8, au niveau d'une bordure de cet hologramme, le contour de l'hologramme étant matérialisé par une ligne pointillée.

La figure 9B illustre l'agrandissement de la figure 9A après avoir formé une zone de leurre 66 tout autour du contour de l'hologramme 64. La zone de leurre est constituée de cellules élémentaires de même taille que les cellules élémentaires de l'hologramme 64, chaque cellule élémentaire de la zone de leurre comprenant une ou plusieurs ouvertures dont la forme est similaires aux ouvertures des cellules élémentaires de l'hologramme 64.

La formation d'ouvertures dans la zone de leurre permet d'obtenir un contour de l'hologramme 64 présentant un niveau de grisé identique à celui de l'hologramme. Ainsi, l'hologramme ne peut être distingué de la zone de leurre.

Pour obtenir un tel rendu, on peut déterminer les tailles moyenne, minimale et maximale des ouvertures formées dans l'hologramme 64, puis définir des ouvertures dans la zone de leurre 66 dont la taille est comprise entre la taille minimale et la taille maximale, l'ensemble des ouvertures de la zone de leurre 66 présentant une taille moyenne égale ou très proche, à 5 % près de la taille moyenne des ouvertures de l'hologramme 64.

On peut également former la zone de leurre en harmonisant séparément les zones formées dans les portions sombres de l'image visible et les zones formées dans les portions claires de l'image visible. Pour cela, on définit les tailles moyenne, minimale et maximale des ouvertures formées dans les cellules élémentaires des zones sombres de l'image visible au niveau de l'hologramme, et on définit des ouvertures aléatoires au niveau des portions sombres de la zone de leurre correspondant à ces caractéristiques. La même opération est ensuite réalisée entre les régions claires de l'image visible au niveau de l'hologramme et les régions claires de l'image binaire visible de la zone de leurre.

On notera que l'on pourra également utiliser tout procédé permettant de faire en sorte que le rendu dans les zones sombres et claires de la zone de leurre soit le même que dans les zones sombres et claires correspondantes de l'hologramme. Notamment, les ouvertures dans la zone de leurre pourront également être plus grandes que les ouvertures les plus grandes au niveau de l'hologramme ou plus petites que les ouvertures les plus petites au niveau de l'hologramme, tant que la taille moyenne des ouvertures dans la zone de leurre est égale ou proche, dans une limite de 5 %, de la taille moyenne des ouvertures dans la zone de l'hologramme.

La zone de leurre doit, de façon générale, présenter un rendu similaire au rendu de l'hologramme brouillé. D'autres techniques que celles présentées ici pourront également être utilisées pour atteindre cet objectif.

Les ouvertures formées dans la zone de leurre sont aléatoirement déphasées de façon que la lecture de l'hologramme ne soit pas perturbée par leur présence. En effet, si elles sont générées aléatoirement, sans cohérence, le signal qu'elles diffractent s'ajoute au signal des ordres principaux de diffraction du réseau, mais pas dans les ordres de reconstruction holographique. Ainsi, la lecture n'est pas perturbée par la présence des ouvertures aléatoires de la zone de leurre.

La figure 10 illustre le résultat obtenu dans le cas de l'intégration d'hologrammes brouillés dans une image réelle.

En figure 10 est repris l'image binaire réelle 60 de la figure 8, comprenant des régions foncées 62, dans laquelle est intégré un hologramme 64A.

La formation de la zone de leurre autour avec la zone de l'hologramme 64A permet de dissimuler l'hologramme dans un fond présentant une même texture.

Selon une variante de réalisation représentée en figure 10, on peut également prévoir de former deux ou plusieurs hologrammes synthétiques 64A et 64B dans une même image visible de grande taille, les deux hologrammes synthétiques étant déphasés l'un de l'autre de π, ou d'un déphasage proche de π, à 10 % près. Ce déphasage consiste à déphaser chaque cellule élémentaire de l'hologramme 64B de π par rapport à chaque cellule élémentaire correspondante de l'hologramme 64A.

Ceci permet d'éviter qu'un fraudeur connaissant l'existence d'un hologramme dans l'image 60 ne puisse remonter à l'image qui a été utilisée pour le former. En effet, si un fraudeur éclaire l'image 60 comprenant les deux hologrammes 64A et 64B déphasés avec un dispositif adapté à la lecture d'un hologramme, les faisceaux issus des hologrammes 64A et 64B interfèrent de façon destructive et ne permettent pas d'obtenir l'image initiale utilisée pour former l'hologramme.

Ainsi, même si le fraudeur sait qu'un hologramme est dissimulé dans l'image 60, il ne peut remonter à l'image utilisée pour former l'hologramme.

Pour lire l'hologramme convenablement et éviter qu'il n'y ait d'interférences destructives, il suffit de masquer un des deux hologrammes 64A et 64B. Cette lecture est relativement aisée lorsque l'on sait où sont formés, au moins approximativement, les hologrammes.

On pourra également prévoir de former plus de deux hologrammes 64A et/ou 64B dans l'image 60. Une telle disposition permet, une fois un premier hologramme ou un premier groupe d'hologrammes identiques masqués, de faciliter la lecture des hologrammes non masqués. En effet, lorsqu'un seul hologramme n'est pas masqué, la lecture de cet hologramme est optimisée si le faisceau de lecture vise cet hologramme. Si plusieurs hologrammes identiques ne sont pas masqués, la lecture peut être faite sans besoin de viser un hologramme de façon précise. En effet, dans ce cas, le faisceau de lecture intercepte plusieurs portions d'hologrammes en phase, ce qui permet de lire l'image avec une bonne qualité sans avoir besoin de viser précisément l'hologramme.

On notera que, en plus des étapes de brouillage de l'hologramme décrites ci-dessus, on pourra également prévoir, avant l'étape 50 de l'organigramme de la figure 4, de réaliser une uniformisation de l'amplitude de la transformée de Fourier de l'image initiale. Cette uniformisation pourra être réalisée par tout procédé connu, et permet d'obtenir une image d'amplitude brouillée dont l'aspect visuel est bien lisse.

Des modes de réalisation particuliers de la présente invention ont été décrits. Diverses variantes et modifications apparaîtront à l'homme de l'art. En particulier, le procédé de dissimulation présenté ici s'applique aux hologrammes synthétiques par codage d'ouvertures, mais également à tout type d'hologramme synthétique connu.

En outre, les hologrammes proposés ici pourront par exemple être formés par la structuration d'une couche opaque formée sur un support ou substrat. A titre d'exemple, la couche opaque pourra être une couche métallique, par exemple en aluminium ou en chrome, formée par dépôt. Elle pourra également être en d'autres matériaux. La structuration de la couche opaque pourra être réalisée par une étape de type lithographique.

Le support ou substrat sera de préférence transparent, par exemple en verre, en saphir ou en quartz. Il pourra également être opaque dans le visible si le contraste de réflectivité avec le métal est suffisant. Une combinaison d'une couche d'aluminium déposée sur substrat de silicium assure par exemple ce contraste.

Avantageusement, la résolution d'écriture actuelle avec ce premier procédé de lithographie est inférieure au micromètre, ce qui est compatible avec un pas des cellules de l'hologramme compris entre 1 et 10 µm (ce qui nous intéresse ici pour un hologramme synthétique par codage d'ouvertures tel que représenté en figures 9A et 9B).

L'hologramme pourra également être formé sur le substrat par une modification d'indice de celui-ci, par exemple par un effet photosensible ou par la modification de l'épaisseur d'une couche transparente formée en surface du substrat (on parle alors d'hologramme de phase ou kinoforme).

Dans ce cas, généralement, une lithographie d'une couche de résine formée sur le substrat est réalisée. Après développement de la résine insolée, la surface du dispositif présente deux niveaux d'épaisseur, celui de la résine restante et celui du substrat. Cette topographie est transférée au substrat par gravure de ce dernier, la résine servant de masque. Les différences de hauteurs sont typiquement de l'ordre de la longueur d'onde, c'est-à-dire de quelques centaines de nanomètres. Ce processus est répété plusieurs fois avec des motifs différents pour former finalement une structuration d'épaisseur complexe. Les différences d'épaisseur du substrat forment des écarts de phase sur un faisceau incident, ce qui permet de modifier la phase de ce dernier en suivant la fonction holographique souhaitée.

On peut également utiliser des matériaux holographiques, par exemple des résines holographiques, dont l'indice peut être modifié proportionnellement à un niveau d'insolation. Ces matériaux sont connus de l'homme de l'art.

En pratique, pour tirer profit de l'aspect visuel de l'hologramme et lui aligner la clef de lecture la première solution de formation d'une couche métallique gravée sur un support ou substrat pourra être privilégiée.

## Revendications

1. Support comportant une image binaire visible intégrant un hologramme synthétique non repérable, comprenant en outre :
une première portion contenant un hologramme synthétique par codage d'ouvertures (64, 64A), ledit hologramme ayant été généré à partir d'une image initiale qu'il est apte à reconstruire par diffraction, et comprenant des premières cellules élémentaires dans chacune desquelles sont définies des premières ouvertures, l'hologramme étant codé de manière à obtenir une amplitude d'aspect uniforme, et
au moins une seconde portion dans laquelle sont définies des deuxièmes cellules élémentaires de même taille que les cellules élémentaires de l'hologramme et comprenant des deuxièmes ouvertures (66), lesdites deuxièmes ouvertures présentant une taille moyenne égale, à 5 % près, à la taille moyenne des premières ouvertures, et un déphasage aléatoirement codé de sorte que leur contribution diffractive ne perturbe pas celle de l'hologramme.

2. Image binaire selon la revendication 1, comprenant une troisième portion dans laquelle est intégré un deuxième hologramme synthétique de Fourier (64B), déphasé de π, à 10 % près, par rapport à l'hologramme de Fourier (64A) intégré dans la première portion.

3. Image binaire selon la revendication 2, comprenant en outre une ou plusieurs portions supplémentaires dans lesquelles est intégré l'hologramme synthétique intégré dans la première portion et une ou plusieurs portions supplémentaires dans lesquelles est intégré le deuxième hologramme synthétique.

4. Procédé de dissimulation d'un hologramme synthétique par codage d'ouvertures, formé à partir d'une image initiale (40), dans une image binaire (60) de dimensions supérieures à celle dudit hologramme (48), comprenant les étapes suivantes :
(a) calculer (42) une transformée de Fourier brouillée de l'image initiale pour obtenir (44, 46) une image d'amplitude et une image de phase brouillées, l'hologramme étant ainsi généré de manière à obtenir une amplitude d'aspect uniforme ;
(b) former un hologramme synthétique (48) à partir de l'image d'amplitude et de l'image de phase brouillées, ledit hologramme comprenant des cellules élémentaires dans lesquelles sont formées des premières ouvertures ;
(c) combiner l'hologramme synthétique avec une première portion de l'image binaire ;
(d) définir (52) des deuxièmes ouvertures dont la taille moyenne est égale, à 5 % près, à la taille moyenne des premières ouvertures et présentant un déphasage aléatoirement codé de sorte que leur contribution diffractive ne perturbe pas celle de l'hologramme ; et
(e) combiner (54) les deuxièmes ouvertures avec une deuxième portion de l'image binaire autre que la première portion.

5. Procédé selon la revendication 4, dans lequel les deuxièmes ouvertures sont combinées avec l'ensemble de la surface de l'image binaire non combiné avec l'hologramme synthétique.

6. Procédé selon la revendication 4, comprenant en outre, avant l'étape (d), une étape consistant à combiner un deuxième hologramme synthétique de fourier avec une troisième portion de l'image binaire, le deuxième hologramme synthétique de fourier étant obtenu à partir de l'hologramme synthétique de fourier combiné dans la première portion par un déphasage de π, à 10 % près.

7. Procédé selon la revendication 6, comprenant en outre, avant l'étape (d), une étape consistant à combiner l'hologramme synthétique combiné dans la première portion avec une ou plusieurs portions supplémentaires de l'image binaire et à combiner le deuxième hologramme synthétique avec une ou plusieurs portions supplémentaires de l'image binaire.

8. Procédé selon l'une quelconque des revendications 4 à 7, dans lequel la combinaison du ou des hologrammes avec l'image binaire s'effectue en insérant des ouvertures directement dans les parties claires de l'image binaire et en insérant des ouvertures de l'hologramme inversées et déphasées de π, à 10 % près, dans les parties foncées de l'image binaire.

9. Procédé de lecture d'un hologramme selon la revendication 2, comprenant une étape de masquage de la troisième portion de l'image binaire.

## Patentansprüche

1. Ein Träger, wobei der Träger ein sichtbares binäres Bild aufweist, das ein nicht wahrnehmbares synthetisches Hologramm beinhaltet, und wobei der Träger ferner Folgendes aufweist:
einen ersten Teil, der ein synthetisches Hologramm (64, 64A) mit kodierter Apertur aufweist, wobei das Hologramm von einem Ausgangsbild erzeugt wurde, so dass es geeignet ist durch Beugung rekonstruiert zu werden, und wobei das Hologramm erste elementare Zellen aufweist, von denen jede erste Aperturen darin definiert hat, wobei das Hologramm kodiert wurde um eine Amplitude mit einheitlichem Aspekt zu erhalten, und
wenigstens einen zweiten Teil mit zweiten elementaren Zellen von gleicher Größe wie die elementaren Zellen des Hologramms und wobei diese zweite Aperturen (66) darin definiert aufweisen, wobei die zweiten Aperturen eine mittlere Größe aufweisen, die gleich ist, mit einer Abweichung innerhalb 5%, der mittleren Größe der ersten Aperturen und einen zufälligen kodierten Phasenshift aufweisen, so dass deren Beugungsanteil den des Hologramms nicht stört.

2. Das binäre Bild nach Anspruch 1, wobei das Bild einen dritten Teil aufweist, in den ein zweites synthetisches Fourier Hologramm (64B) integriert ist, welches mit π Phasen verschoben ist, mit einer Abweichung innerhalb 10%, bezüglich des Fourier Hologramms (64A), welches in den ersten Teil integriert ist.

3. Das binäre Bild nach Anspruch 2, wobei das Bild ferner einen oder eine Vielzahl von Teilen aufweist, in die das synthetische Hologramm integriert ist, das in den ersten Teil integriert ist und ein oder eine Vielzahl von zusätzlichen Teilen, in die das zweite synthetische Hologramm integriert ist.

4. Ein Verfahren zum Verbergen eines synthetischen Hologramms mit kodierter Apertur, das von einem Ausgangsbild (40) gebildet wird, in einem binären Bild (60) das Ausmaße aufweist, die größer sind als das Hologramm (48), wobei das Verfahren folgende Schritte aufweist:
(a) Berechnen (42) einer verschlüsselten Fourier Transformation des Ausgangsbildes, um ein verschlüsseltes Amplitudenbild und Phasenbild zu erhalten (44, 46), wobei das so erzeugte Hologramm eine Amplitude mit einheitlichem Aspekt aufweist;
(b) Ausbilden eines synthetischen Hologramms (48) von dem verschlüsselten Amplitudenbild und dem verschlüsselten Phasenbild, wobei das Hologramm elementare Zellen aufweist, die Öffnungen darin ausgebildet haben;
(c) Kombinieren des synthetischen Hologramms mit einem ersten Teil des binären Bildes;
(d) Definieren (52) von zweiten Öffnungen mit einer mittleren Größe, die gleich ist, mit einer Abweichung innerhalb 5%, der mittleren Größe der ersten Öffnungen und einen zufälligen kodierten Phasenshift aufweisen, so dass deren Beugungsanteil den des Hologramms nicht stört; und
(e) Kombinieren (54) der zweiten Öffnungen mit einem zweiten Teil des binären Bildes der sich von dem ersten Teil unterscheidet.

5. Das Verfahren nach Anspruch 4, wobei die zweiten Öffnungen kombiniert sind mit der gesamten Oberfläche des binären Bildes, das nicht mit dem synthetischen Hologramm kombiniert ist.

6. Das Verfahren nach Anspruch 4, wobei das Verfahren ferner aufweist, dass vor dem Schritt (d), ein Schritt des Kombinierens eines zweiten synthetischen Fourier Hologramms mit einem dritten Teil des binären Bilds ausgeführt wird, wobei das zweite synthetische Fourier Hologramm erhalten wird aus dem synthetischen Fourier Hologramm, das mit dem ersten Teil kombiniert wurde mit einem Phasenshift von π, mit einer Abweichung von 10%.

7. Das Verfahren nach Anspruch 6, wobei das Verfahren ferner aufweist, dass vor dem Schritt (d), ein Schritt des Kombinierens des synthetischen Hologramms, welches in dem ersten Teil kombiniert ist mit einem oder einer Vielzahl von zusätzlichen Teilen des binären Bildes und des Kombinierens des zweiten synthetischen Hologramms mit einem oder einer Vielzahl von zusätzliche Teilen des binären Bildes.

8. Das Verfahren nach einem der Ansprüche 4 bis 7, wobei die Kombination des oder der Hologramme mit dem binären Bild durch das Einfügen von Aperturen direkt in die hellen Teile des binären Bildes ausgeführt wird und durch das Einfügen von Aperturen des Hologramms, invertiert und Phasen verschoben mit π, mit einer Abweichung innerhalb 10%, in die dunklen Teile des binären Bildes.

9. Ein Verfahren zum Lesen des Hologramms nach Anspruch 2, wobei das Verfahren einen Schritt des Maskierens des dritten Teils des binären Bilds aufweist.

## Claims

1. A support comprising a visible binary image integrating a non-perceptible synthetic hologram, further comprising:
a first portion containing a synthetic coded-aperture hologram (64, 64A), said hologram having been generated from an initial image that it is capable of reconstructing by diffraction, and comprising first elementary cells, each of which having first apertures defined therein, the hologram being coded to obtain an amplitude having a uniform aspect, and
at least one second portion having second elementary cells of same size as the elementary cells of the hologram and comprising second apertures (66) defined therein, said second apertures having an average size equal, to within 5%, to the average size of the first apertures and a randomly coded phase shift so that their diffractive contribution does not disturb that of the hologram.

2. The binary image of claim 1, comprising a third portion into which is integrated a second synthetic Fourier hologram (64B), phase-shifted by n, to within 10%, with respect to the Fourier hologram (64A) integrated into the first portion.

3. The binary image of claim 2, further comprising one or a plurality of additional portions into which is integrated the synthetic hologram integrated into the first portion and one or a plurality of additional portions having the second synthetic hologram integrated therein.

4. A method of concealing a synthetic coded-aperture hologram, formed from an initial image (40), in a binary image (60) having dimensions larger than that of said hologram (48), comprising the steps of:
(a) calculating (42) a scrambled Fourier transform of the initial image to obtain (44, 46) a scrambled amplitude image and phase image, the hologram being thus generated to obtain an amplitude having a uniform aspect;
(b) forming a synthetic hologram (48) from the scrambled amplitude image and phase image, said hologram comprising elementary cells having first openings formed therein;
(c) combining the synthetic hologram with a first portion of the binary image;
(d) defining (52) second openings having an average size equal, to within 5%, to the average size of the first openings and having a randomly coded phase shift so that their diffractive contribution does not disturb that of the hologram; and
(e) combining (54) the second openings with a second portion of the binary image other than the first portion.

5. The method of claim 4, wherein the second openings are combined with the entire surface of the binary image non-combined with the synthetic hologram.

6. The method of claim 4, further comprising, before step (d), a step of combining a second synthetic Fourier hologram with a third portion of the binary image, the second synthetic Fourier hologram being obtained from the synthetic Fourier hologram combined in the first portion by a n phase shift, to within 10%.

7. The method of claim 6, further comprising, before step (d), a step of combining the synthetic hologram combined in the first portion with one or a plurality of additional portions of the binary image and combining the second synthetic hologram with one or a plurality of additional portions of the binary image.

8. The method of any of claims 4 to 7, wherein the combination of the hologram(s) with the binary image is performed by inserting apertures directly into the light portions of the binary image and by inserting apertures of the hologram, inverted and phase-shifted by n, to within 10%, into the dark portions of the binary image.

9. A method of reading the hologram of claim 2, comprising a step of masking the third portion of the binary image.
